Europäisches Patentamt

European Patent Office

Office européen des brevets

(11) Publication number: **0 381 313**
**A2**

# (12) EUROPEAN PATENT APPLICATION

(21) Application number: **90300160.0**

(22) Date of filing: **05.01.90**

(51) Int. Cl.⁵: **H04N 5/40, H04N 5/38, H01P 5/18, H01P 1/213**

(30) Priority: **28.01.89 GB 8901913**

(43) Date of publication of application:
**08.08.90 Bulletin 90/32**

(84) Designated Contracting States:
**AT BE CH DE DK ES FR GB GR IT LI LU NL SE**

(71) Applicant: **THE MARCONI COMPANY LIMITED**
**The Grove Warren Lane**
**Stanmore Middlesex HA7 4LY(GB)**

(72) Inventor: **Burrage, Clement Peter**
**Grassmead Queenborough Lane**
**Braintree Essex CM7 8QD(GB)**

(74) Representative: **Loven, Keith James et al**
**GEC plc Patent Dept.(Chelmsford Office)**
**GEC-Marconi Research Centre West**
**Hanningfield Road**
**Great Baddow Essex CM2 8HN(GB)**

(54) Television transmitter.

(57) A device for interspersing first and second intermittent r.f. signals to form a single output signal, comprising a directional coupler, means for applying the first signal to a first port of the coupler, and means for dividing the second signal into two and for applying the divided signal in quadrature to two other ports of the coupler, such that substantially all the input power appears at the fourth port of the coupler. A television transmitter, comprising in the vision modulated r.f. signal amplification stage means for separating the picture and synchronisation pulse elements of said signal, separate amplifiers for the separated elements of the signal, and a signal combiner for recombining the amplified separated elements.

Fig.3.

## TELEVISION TRANSMITTER

This invention relates in one aspect to a television transmitter, and in another aspect to a device and method for interspersing first and second intermittent r.f. signals to form a single output signal.

In a television transmitter, the vision modulated r.f. carrier is typically amplified by means of a klystron before being combined with the sound signal and passed to the antenna. Alternatively, a large number of solid state amplifiers in parallel can be used.

Television r.f. amplifiers have to be proportioned to accept the whole TV waveform from peak white to sync bottom. This means that the picture content is contained in the bottom half of the power range of the amplifier, with the top half being used to provide only the sync pulses.

According to one aspect of the invention, a television transmitter comprises, in the vision modulated r.f. signal amplification stage means for separating the picture and synchronisation pulse elements of said signal, separate amplifiers for the separated elements of the signal, and a signal combiner for recombining the amplified separated elements.

Preferably, the signal combiner comprises a directional coupler to the ports at one end of which are applied to the picture modulated r.f. signal and half of the synchronisation pulse modulated r.f. signal, respectively, the other half of the synchronisation pulse modulated r.f. signal being applied to the port directly connected to the picture signal input port in quadrature with the first half of the signal, the fourth port of the coupler being an output port, and wherein the coupling value of the coupler is such that substantially all the input power appears at the output port.

This arrangement permits the picture and sync r.f. signals to be amplified separately and then combined together, so that the whole power range of the picture amplifier can be used. The sync amplifiers, being effectively only pulse amplifiers, can be of smaller power rating, despite the fact that the instantaneous sync tip power is higher than that of the picture.

According to another aspect of the invention, a device for interspersing first and second intermittent r.f. signals to form a single output signal comprises a directional coupler, means for applying the first signal to a first port of the coupler, and means for dividing the second signal into two and for applying the divided signal in quadrature to two other ports of the coupler, such that substantially all the input power appears at the fourth port of the coupler.

This aspect of the invention also provides a method of interspersing first and second intermittent r.f. signals to form a single output signal, comprising applying the first signal to a first port of a directional coupler, dividing the second signal into two and applying the two parts of the signal in quadrature into two other ports of the coupler, such that substantially all the output power appears at the fourth port of the coupler. Preferably the first signal and the part of the second signal applied to ports at one end of the coupler are in phase, and the other part of the second signal is applied to the port at the other end of the coupler connected to the port to which the first signal is applied.

Reference is made to the drawings, in which:

Figure 1 illustrates diagrammatically a combiner according to one aspect of the invention during that part of a television vision signal when only the picture modulation is present;

Figure 2 shows the same device when only the synchronisation pulse part of the vision signal is present; and

Figure 3 illustrates diagrammatically part of a television transmitter in accordance with the invention.

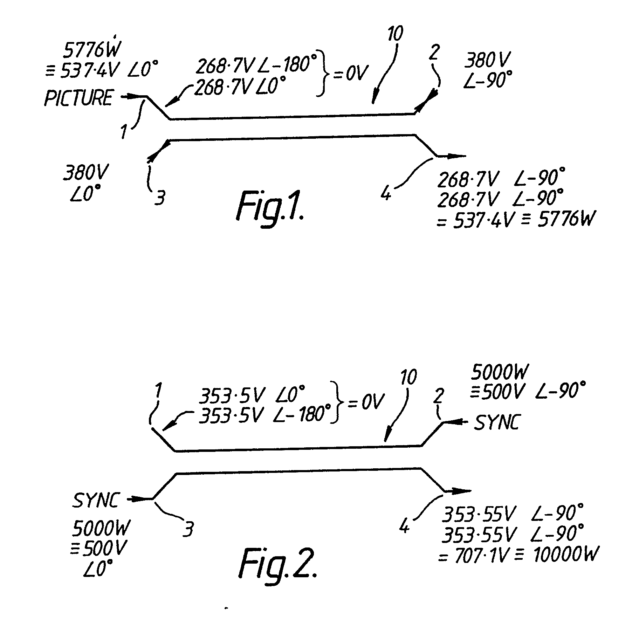

Figures 1 and 2 illustrate the principle of operation of a device for interspersing first and second intermittent r.f. signals to form a single output signal, in particular for combining separately amplified picture and synchronisation pulse-modulated r.f. carrier signals in a television transmitter. Figure 1 shows the case where the picture signal only is present. A 3dB coupler 10 has input ports 1, 2 and 3 and an output port 4. The picture modulated signal is introduced at port 1. In the illustrated case, the transmitter is a 10 kW television transmitter, and the peak picture signal, corresponding to an all black picture, is equal to 76% of the sync pulse peak voltage, i.e. 537.4 volts, equivalent to 5776 watts. As the coupler has a coupling value of 3dB, the input power is divided equally between port 2 and port 3, giving rise to a voltage of 537.4 x 1/..2 = 380 volts at each port. At port 2, the signal lags by 90°, as the coupler has a quarter wavelength effective length. As the sync pulse amplifier is off, each of ports 2 and 3 are open circuit, and therefore the signal is reflected back into the coupler without phase change. Thus, the voltage at port 3 divided equally between port 1 and port 4, again by the factor of 1/..2 giving 268.7 volts at a phase angle of 0° relative to the input in port one and the same voltage with a relative phase angle of -90° in the output port 4. The voltage reflected in the port 2 gives rise to the same voltage, 268.7 volts, in the port 1 with a relative phase angle of -180° and in the output port 4 with the relative phase angle of -90°. Since the two components in port 1 are 180° out of phase, they interfere and cancel, while the two components at port 4 are in phase and combine giving a voltage of 537.4 volts which is equivalent to the input power of 5776 watts.

Referring now to Figure 2, when the picture amplifier is off, the port 1 becomes open circuit. The sync pulse modulated carrier is introduced at port 3 and at port 2 in quadrature, that is to say with a relative angle of 0° at port 3 and -90° at port 2. These voltages divide across the ports according to the coupling factor, producing signals which interfere in port 1 and cancel each other and in phase in port 4 which combine giving a voltage of 707.1 volts, equivalent to 10,000 watts, i.e. the input sync pulse signal.

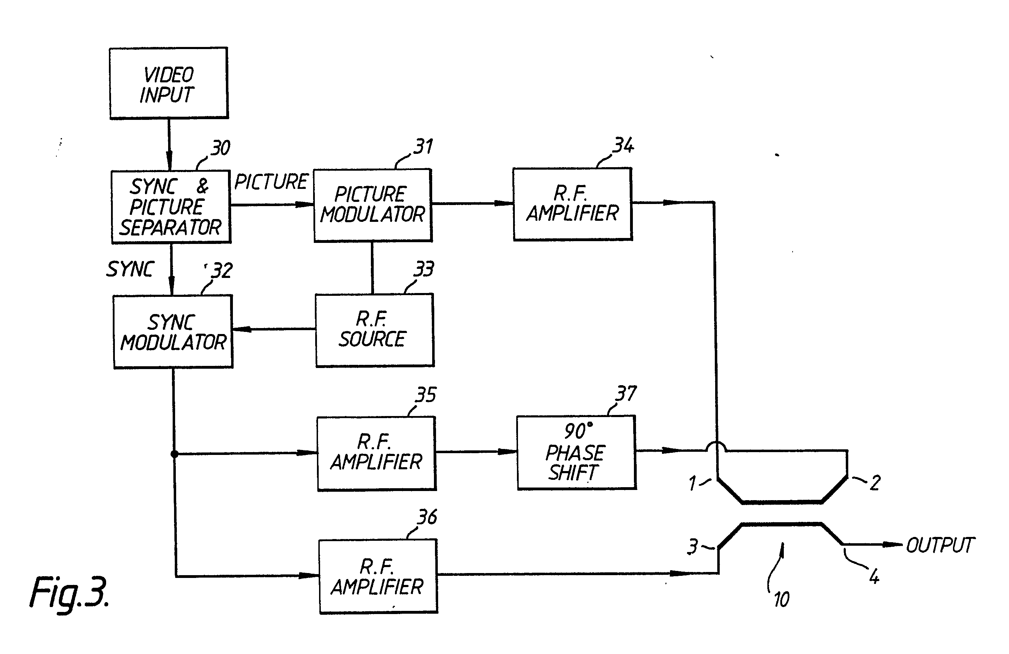

Figure 3 shows the amplification stage of a television vision transmitter. The video signal is separated in a separation stage 30 to produce a picture component which is fed to a picture modulator 31, and a synchronisation pulse component which is fed to a synchronisation pulse modulator 32. Each modulator 31 and 32 is connected to an r.f. source 33 supplying the r.f. carrier. The picture modulated carrier then passes to r.f. amplifiers 34, shown as a single block, but typically comprising a plurality of solid state amplifiers in parallel. The sync. modulated carrier passes to two sets of r.f. amplifiers 35 and 36, connected in parallel, the output from the first 35 being connected via a 90° phase shift 37 to port 2 of the coupler 10, while the output from the second 36 is connected to the port 3 of the coupler. The amplified picture-modulated carrier is passed to the port 1 of the coupler. The signals are output from port 4 of the coupler, as hereinbefore described with reference to Figures 1 and 2.

Where banks of solid state amplifiers in parallel are used for the amplifiers 34, 35 and 36, in each case the signal is split before being fed to the amplifiers in phase, and then recombined in conventional manner after amplification to give a single output signal.

It will be appreciated that when reference is made to the ports being effectively open circuit, this is because the amplifiers present a high output source impedance when they are effectively off between output.

## Claims

1. A television transmitter, comprising in the vision modulated r.f. signal amplification stage means for separating the picture and synchronisation pulse elements of said signal, separate amplifiers for the separated elements of the signal, and a signal combiner for recombining the amplified separated elements.

2. A television transmitter according to Claim 1, wherein the signal combiner comprises a directional coupler to the ports at one end of which are applied the picture modulated r.f. signal and half of the synchronisation pulse modulated r.f. signal, respectively, the other half of the synchronisation pulse modulated r.f. signal being applied to the port directly connected to the picture signal input port in quadrature with the first half of the signal, the fourth port of the coupler being an output port, and wherein the coupling value of the coupler is such that substantially all the input power appears at the output port.

3. A television transmitter according to Claim 2, wherein the directional coupler is a 3dB hybrid coupler.

4. A device for interspersing first and second intermittent r.f. signals to form a single output signal, comprising a directional coupler, means for applying the first signal to a first port of the coupler, and means for dividing the second signal into two and for applying the divided signal in quadrature to two other ports of the coupler, such that substantially all the input power appears at the fourth port of the coupler.

5. A device according to Claim 4, wherein the coupler is a 3 dB hybrid coupler.

6. A method of interspersing first and second intermittent r.f. signals to form a single output signal, comprising applying the first signal to a first port of a directional coupler, dividing the second signal into two and applying the two ports of the signal in quadrature to two other ports of the coupler, such that substantially all the input power appears at the fourth port of the coupler.

7. A method according to Claim 6, wherein the first signal and the part of the second signal applied to ports at one end of the coupler are in phase, and the other part of the second signal is applied to the port at the other end o the coupler connected to the port to which the first signal is applied.

8. A method according to Claim 7 wherein the directional coupler is a 3dB hybrid coupler.

5776W
≡ 537·4V ∠0°
PICTURE

268·7V ∠−180°
268·7V ∠0° } = 0V

10

2

380V
∠−90°

1

380V
∠0°

3

*Fig.1.*

4

268·7V ∠−90°
268·7V ∠−90°
= 537·4V ≡ 5776W

1

353·5V ∠0°
353·5V ∠−180° } = 0V

10

2

5000W
≡500V ∠−90°

SYNC

SYNC

5000W
≡500V
∠0°

3

*Fig.2.*

4

353·55V ∠−90°
353·55V ∠−90°
= 707·1V ≡ 10000W

Fig.3.